# EUROPÄISCHE PATENTANMELDUNG

(11) **EP 1 205 835 A2**
(43) Veröffentlichungstag der Anmeldung: **15.05.2002**
(21) Anmeldenummer: 01125269.9
(22) Anmeldetag: 24.10.2001
(51) Int. Cl.: G06F 1/18

(54) **Befestigungsmittel**

(30) Priorität: 09.11.2000 DE 10055455
(71) Anmelder: Fujitsu Siemens Computers GmbH, 81739 München (DE)
(72) Erfinder: Hein, Holger, 86199 Augsburg (DE); Neukam, Wilhelm, 86399 Bobingen (DE)
(74) Vertreter: Epping Hermann & Fischer

(57) **Zusammenfassung**

Die Erfindung betrifft ein Befestigungsmittel zur schraubenlosen Festlegung von Komponenten (1) in einem Einbaukäfig (3).

Durch die Erfindung erfolgt die Festlegung der Komponenten (1) im Einbaukäfig (3) mit einem Träger (5) mit vorspringenden Zapfen (6), welche in entsprechende Gewindebohrungen (2) der Komponenten gesteckt werden und welcher nach dem Einschieben der Komponente (2) mit aufgestecktem Träger (5) mit dem Einbaukäfig (3) verrastet.

## Beschreibung

Die Erfindung betrifft ein Befestigungsmittel zur Festlegung von Komponenten, wie zum Beispiel Laufwerken in einem Einbaukäfig, mit einem Träger mit daran angeordneten Zapfen, welche so angeordnet sind, daß sie in die Gewindebohrungen der Komponenten einsteckbar sind.

Bisher ist es bekannt, die Komponenten mit dem Einbaukäfig zu verschrauben, wobei hierzu am Einbaukäfig in den Seitenwandungen die entsprechenden Bohrungen und an den Komponenten die entsprechenden Gewindebohrungen vorhanden sind.

Aus der EP 0 763 792 A1 ist eine schraubenlose Befestigung bekannt, bei der die Komponente auf ein flaches Kunststoffteil gelegt wird, dessen Seitenteile über Folienscharniere an gegen die Seitenwände der Komponente geklappt werden können. Die Seitenteile sind mit Nasen versehen, welche in die entsprechenden Gewindebohrungen der Komponenten eingreifen.

Das Kunststoffteil mit der darin aufgenommenen Komponente wird komplett in den Einschubkäfig eingeschoben.

Diese Lösung hat den Nachteil, daß zum einen die Montage relativ aufwendig ist, da jede Komponente von dem Kunststoffteil eingeschlagen werden muß und beidseitig die Nasen in die Gewindebohrungen eingedrückt werden müssen. Desweiteren stellt sich ein Problem bei mehreren übereinander angeordneten Komponenten, da bei der Lösung gemäß der EP 0 763 792 A1 auch die Unterseite jeder Komponente vom Kunststoffteil umgeben ist und somit die Komponenten zwangsläufig in der Dicke des Kunststoffteiles beabstandet sein müssen.

Der Erfindung liegt daher die Aufgabe zugrunde, das gattungsgemäße Befestigungsmittel derart weiterzubilden, daß die oben angeführten Nachteile ausgeräumt sind.

Diese Aufgabe wird erfindungsgemäß dadurch gelöst,daß das Befestigungsmittel nur aus dem Träger besteht, dieser flächig ausgebildet und lediglich an eine Seitenwandung der Komponente ansteckbar ist.

Somit muß der Träger lediglich an eine Seitenwandung der Komponente angesteckt werden um diese im Einbaukäfig festzulegen. Ein Einschlagen der Komponente wie beim Stand der Technik entfällt.

Der Träger ist vorteilhafterweise mit seiner Grundfläche kleiner als die Seitenwandung der Komponente ausgebildet, so daß auch mehrere übereinander angeordnete Komponenten mit aufgesteckten Träger in den Einbaukäfig eingeschoben werden können.

Vorzugsweise ist der Träger mit einem Rastmittel versehen, welches mit dem Einbaukäfig zusammenwirkt und somit verhindert, daß die Komponente wieder aus dem Einbaukäfig gezogen werden kann.

Das Rastmittel ist jedoch nicht zwingend erforderlich, so ist es zum Beispiel auch möglich, am Einbaukäfig ein Rastmittel vorzusehen, welches eine Kante des Trägers nach dem Einstekken hintergreift.

Um eine gute Fixierung der Träger in den Gewindebohrungen der Komponenten zu gewährleisten, ist gemäß einer bevorzugten Weiterbildung jeder Zapfen mit einem Ringwulst ausgebildet. Dieser Ringwulst bewirkt ein Verkrallen in den Gewindebohrungen, wodurch der Träger relativ gut an der Seitenwandung der Komponente nach dem Aufstecken fixiert ist.

Das Rastmittel ist vorzugsweise als Rasthaken ausgebildet, welcher auf die gegenüberliegende Seite wie die Zapfen von dem Träger absteht.

Der Träger ist vorzugsweise aus Kunststoff hergestellt und somit auch in seiner Herstellung sehr kostengünstig.

Er kann auf beiden Seiten der Komponente angesteckt werden und erlaubt auch eine Montage ohne Entfernen der Frontblende der Komponenten.

Ebenso kann der Träger bei Komponenten mit abnormen Gewindebohrungen als Abstandshalter von innen in den Einbaukäfig gesteckt werden, wobei in diesem Fall die Fixierung der Komponenten nach dem Einschieben durch Schrauben erfolgt, welche durch entsprechende Bohrungen im Einbaukäfig für abnorme Komponenten gesteckt und durch den Kunststoffträger hindurch in die Komponenten eingeschraubt werden.

Weitere vorteilhafte Ausführungsformen der Erfindung sind in den Unteransprüchen sowie der nachfolgenden Beschreibung offenbart.

Die Erfindung wird anhand eines in den Zeichnungen dargestellten Ausführungsbeispieles näher erläutert.

In den Zeichnungen zeigen:
- Figur 1: eine Explosionsdarstellung von drei Komponenten, drei Trägern und einem Einbaukäfig,
- Figur 2: einen Träger in Schrägansicht und
- Figur 3: die in Figur 1 dargestellten Teile im zusammengebauten Zustand.

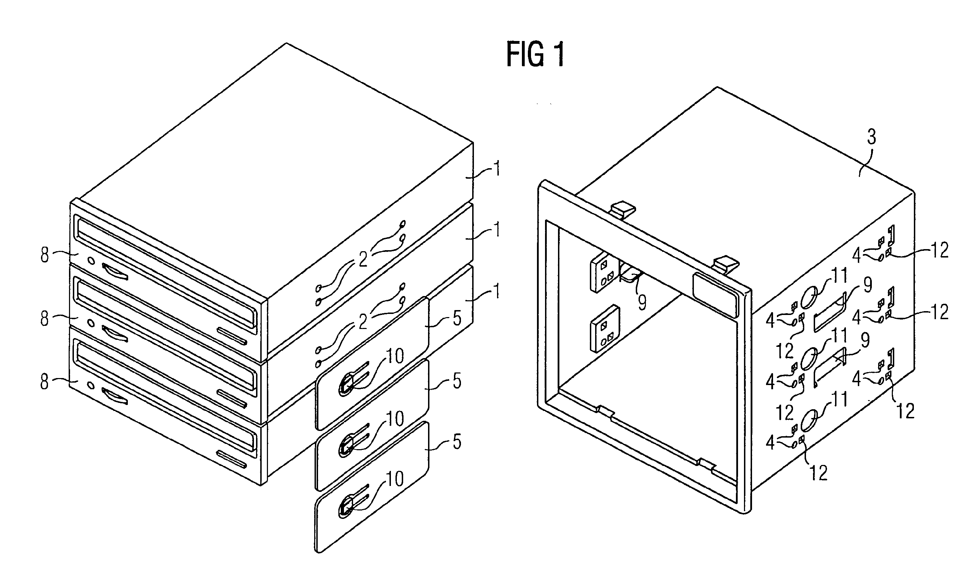

Figur 1 zeigt drei Komponenten 1, wie sie bei Computern verwendet werden. Diese Komponenten können zum Beispiel Festplattenlaufwerke (HD's), CD-ROM-Laufwerke, Zip-Laufwerke oder dergleichen sein.

Die Komponenten 1 sind in ihrer Größe in der Regel normiert und weisen an der Seite Gewindebohrungen 2 auf, über welche die Komponenten 1 über Schrauben im Computer direkt oder über einen Einbaukäfig 3, wie rechts in Figur 1 dargestellt, fixiert werden. Zur Festlegung im Einbaukäfig 3 sind bei dessen Seitenwandungen Bohrungen 4 vorgesehen, welche im gleichen Raster wie die Gewindebohrungen 2 an den Seitenwandungen der Komponenten 1 angeordnet sind.

Wie bereits in der Beschreibungseinleitung erwähnt, ist das Einbauen der Komponenten und das Verschrauben Handarbeit und erfordert relativ viel Bearbeitungszeit. Daher ging man inzwischen über, schraubenlose Befestigungsmethoden zu erfinden.

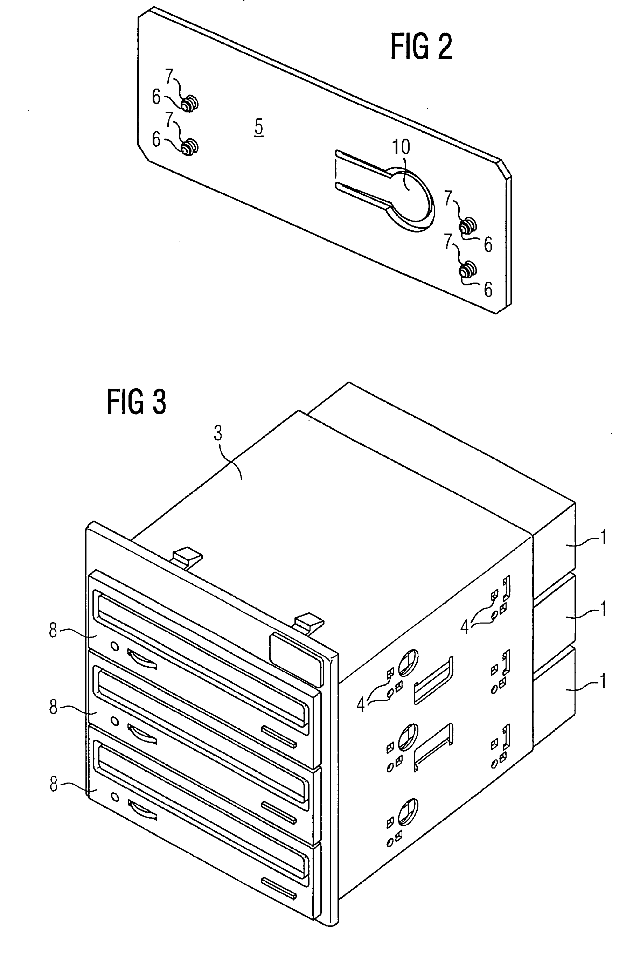

Gemäß der vorliegenden Erfindung wird hierzu lediglich ein Träger 5 verwendet, wie er auch in Figur 2 in Schrägansicht dargestellt ist. Der Träger 5 ist flächig ausgebildet und weist auf der einen Seite exakt im Rastermaß der Gewindebohrungen 2 an den Komponenten aus der Fläche hervorspringende Zapfen 6 auf. Jeder Zapfen ist mit einem Ringwulst 7 versehen, welcher dazu beiträgt, daß beim Eindrücken der Zapfen 6 in die Gewindebohrungen 2 diese besser in den Gewindebohrungen 2 fixiert sind. Der Ringwulst 7 verhakt sich dabei in den Gewindegängen.

Der Träger 5 ist ein Kunststoffteil und daher sehr leicht herzustellen und auch sehr leicht zu montieren, da er lediglich in die Gewindebohrungen 2 mit den Zapfen 6 gedrückt werden muß.

Ist der Träger 5 an die Komponente 1 angesteckt, wird diese lediglich in den Einbaukäfig 3 eingeschoben.

Figur 3 zeigt die drei Komponenten 1 im in den Einbaukäfig 3 eingesteckten Zustand.

Der Träger 5 hat den großen Vorteil, daß zur Montage auch,die Frontblende der Komponenten 1 nicht abgenommen werden muß.

Desweiteren weist der Träger 5 eine Fläche auf, welche kleiner ist als die Seitenwandung einer Komponente 1, so daß wie in den Figuren 1 und 3 dargestellt, auch ohne weiteres mehrere Komponenten übereinander mit dem Träger 5 in den Einbaukäfig 3 eingeschoben werden können.

Zur Höheneinstellung sind in den Seitenwandungen des Einbaukäfig Laschen 9 herausgetrennt und nach innen um 90° umgebogen. Auf diesen Laschen 9 sitzt jeweils die Unterseite einer Komponente 1 auf.

Zur Fixierung der Komponenten gegen das Herausziehen ist zwischen dem Träger 5 und der Seitenwandung des Einbaukäfigs 3 ein Rastmittel vorgesehen. Im dargestellten Ausführungsbeispiel ist das Rastmittel 10 als Rasthaken im Träger 5 ausgebildet und die Gegenrast als Aussparung 11 jeweils an der entsprechenden Stelle im Einbaukäfig 3.

Ebenso ist es jedoch auch möglich, an der Seitenwandung des Einbaukäfigs 3 Rasthaken vorzusehen, welche die Vorderkante des Trägers 5 im eingesteckten Zustand hintergreift.

Durch den Träger 5 ist somit ein Befestigungsmittel zur Festlegung von Komponenten in einem Einbaukäfig geschaffen, welches extrem kostengünstig herzustellen ist und welches auch leicht montiert werden kann.

In denjenigen Fällen, in denen die Komponenten 1 keine genormten Gewindebohrungen aufweisen, ist es möglich, den Träger 5 mit seinen Zapfen 6 von innen durch die Bohrungen 4 zu stecken und danach die Komponenten 1 einzuschieben. Der Einbaukäfig 3 ist in der Regel auch für abnorme Laufwerke, das heißt Laufwerke, bei denen die Gewindebohrungen 2 nicht im Rastermaß angeordnet sind, mit Bohrungen 12 versehen, über welche dann mit Schrauben durch den Kunststoffträger 5 hindurch die abnormen Komponenten beziehungsweise Laufwerke festgelegt werden können.

Der Träger 5 hat im Vergleich zu den aus dem Stand der Technik bekannten schraubenlosen Befestigungsmethoden den Vorteil, daß er lediglich auf einer Seite an der Komponente angesteckt wird, günstig in der Herstellung, leicht in der Montage sowie sparsamer im Verbrauch von Bauraum ist.

## Patentansprüche

1. Befestigungsmittel zur Festlegung von Komponenten (1), wie zum Beispiel Laufwerken in einem Einbaukäfig (3), mit einem Träger (5) und daran angeordneten Zapfen (6), welche so angeordnet sind, daß sie in die Gewindebohrungen (2) der Komponenten (1) einsteckbar sind,
**dadurch gekennzeichnet, daß** das Befestigungsmittel nur aus einem Träger (5) besteht, dieser flächig ausgebildet und lediglich an eine Seitenwandung der Komponente ansteckbar ist.

2. Befestigungsmittel nach Anspruch 1,
**dadurch gekennzeichnet, daß**
der Träger (5) in seiner Grundfläche kleiner als die Seitenwandung einer Komponente (1) ausgebildet ist.

3. Befestigungsmittel nach einem der Ansprüche 1 oder 2,
**dadurch gekennzeichnet, daß** es mit einem Rastmittel versehen ist.

4. Befestigungsmittel nach Anspruch 3,
**dadurch gekennzeichnet, daß**
das Rastmittel als Rasthaken (10) am Träger ausgebildet ist und dies auf die gegenüberliegende Seite der Zapfen (6) von dem Träger (5) absteht.

5. Befestigungsmittel nach einem der Ansprüche 1 bis 4,
**dadurch gekennzeichnet, daß** an den Zapfen (6) ein Ringwulst (7) ausgebildet ist.

6. Befestigungsmittel nach einem der Ansprüche 1 bis 5,
**dadurch gekennzeichnet, daß** der Träger aus Kunststoff besteht.

7. Befestigungsmittel nach einem der Ansprüche 1 bis 6,
**dadurch gekennzeichnet, daß**
der Träger (5) ohne das Entfernen der Frontblende der Komponenten (1) montierbar ist.

8. Einbaukäfig (3) zur Aufnahme von Komponenten (1), wie Laufwerken, mit nach innen vorspringenden Laschen (9) zur Höhenfixierung der Komponenten (1) und Aussparungen (11) in den Seitenwandungen, die mit Rastmitteln eines Befestigungsmittels nach einem der Ansprüche 1 bis 7 zur Fixierung der Komponenten (1) gegen das Herausziehen zusammenwirken.

9. Einbaukäfig (3) mit eingesetzter Komponente (1), welche vertikal über von den Seitenwandungen nach innen gebogenen Laschen (9) und horizontal über ein Befestigungsmittel nach einem der Ansprüche 1 bis 7 fixiert ist.
